(19) Europäisches Patentamt
European Patent Office
Office européen des brevets

(11) EP 0 953 285 A1

(12) EUROPEAN PATENT APPLICATION

(43) Date of publication:
**03.11.1999 Bulletin 1999/44**

(51) Int. Cl.[6]: **A01N 43/90**, A01N 33/18
// (A01N43/90, 33:18)

(21) Application number: **98401023.1**

(22) Date of filing: **27.04.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**E.I. DU PONT DE NEMOURS AND COMPANY**
**Wilmington Delaware 19898 (US)**

(72) Inventors:
- **Gabard, Jérôme**
  **68125 Houssen (FR)**
- **Parisi, Jean-Paul**
  **68700 Cernay (FR)**

(74) Representative:
**Hirsch, Marc-Roger et al**
**Cabinet Hirsch**
**34 rue de Bassano**
**75008 Paris (FR)**

# (54) Hirbidical mixtures

(57) This invention relates to herbicidal mixtures comprising azafenidin and at least one dinitroaniline herbicide selected from pendimethalin, dinitramine, ethalfluralin and trifluralin, herbicidal compositions of said mixtures, and a method for the use of said mixtures to control undesired vegetation.

EP 0 953 285 A1

## Description

FIELD OF THE INVENTION

The present invention relates to mixtures of herbicides that have a safening effect on crops while retaining or increasing weed control.

BACKGROUND OF THE INVENTION

The control of undesired vegetation is extremely important in achieving high crop efficiency. Achievement of selective control of the growth of weeds especially in such useful crops as rice, soybeans, sugar beets, sunflowers, corn, potatoes, wheat, barley, tomatoes and plantation crops among others is very desirable. Unchecked weed growth in such useful crops can cause significant reduction in productivity and thereby result in increased costs to the consumers. The control of undesired vegetation in noncrop areas is also important. The need for finding products that achieve such results continues to be commercially important.

Combinations of herbicides are typically used to broaden the spectrum of plant control or enhance the level of control of any given species through additive effect. Certain rare combinations surprisingly give a less-than-additive or safening effect on crops while retaining or increasing synergistically weed control. Several such valuable combinations have now been discovered.

U.S. Patent No. 4,213,773, U.S. Patent No. 3,920,742, U.S. Patent No. 3,617,252 and U.S. Patent No. 3,257,190 disclose individual compounds used in the mixtures of this invention, but none of these references disclose the mixtures or their surprising crop safening.

SUMMARY OF THE INVENTION

This invention relates to mixtures comprising 2-[2,4-dichloro-5-(2-propynyloxy)phenyl]-5,6,7,8-tetrahydro-1,2,4-triazolo[4,3-α]pyridin-3(2*H*)-one (azafenidin, Formula **I**)

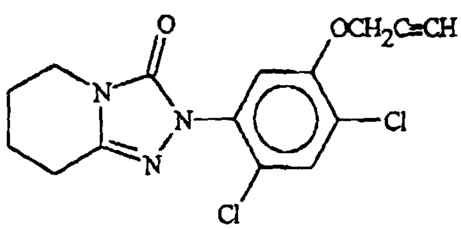

**I**

and at least one dinitroaniline herbicide of Formula **II**

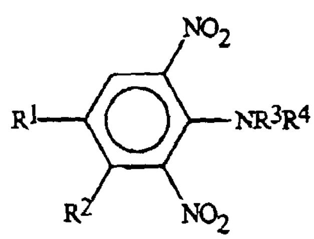

**II**

wherein

$R^1$ is $CH_3$, $R^2$ is $CH_3$, $R^3$ is $CH(CH_2CH_3)_2$ and $R^4$ is H, or
$R^1$ is $CF_3$, $R^2$ is $NH_2$, $R^3$ is $CH_2CH_3$ and $R^4$ is $CH_2CH_3$, or
$R^1$ is $CF_3$, $R^2$ is H, $R^3$ is $CH_2CH_3$ and $R^4$ is $CH_2C(CH_3)=CH_2$, or

$R^1$ is $CF_3$, $R^2$ is H, $R^3$ is $CH_2CH_2CH_3$ and $R^4$ is $CH_2CH_2CH_3$.

which have now been discovered to exhibit a crop safening effect while retaining or synergistically increasing weed control. This invention also relates to herbicidal compositions comprising herbicidally effective amounts of the aforesaid mixtures and at least one of the following: surfactant, solid or liquid diluent. This invention also relates to a method of controlling undesired vegetation comprising applying to the locus of the vegetation herbicidally effective amounts of the aforesaid mixtures.

The mixtures of the invention preferred for enhanced herbicidal utility include:

a) the compound of Formula **I** and the compound of Formula **II** wherein $R^1$ is $CH_3$, $R^2$ is $CH_3$, $R^3$ is $CH(CH_2CH_3)_2$ and $R^4$ is H (which is *N*-(1-ethylpropyl)-3,4-dimethyl-2,6-dinitrobenzenamine; pendimethalin);
b) the compound of Formula **I** and the compound of Formula **II** wherein $R^1$ is $CF_3$, $R^2$ is $NH_2$, $R^3$ is $CH_2CH_3$ and $R^4$ is $CH_2CH_3$ (which is $N^3$,$N^3$-diethyl-2,4-dinitro-6-(trifluoromethyl)-1,3-benzenediamine; dinitramine);
c) the compound of Formula **I** and the compound of Formula **II** wherein $R^1$ is $CF_3$, $R^2$ is H, $R^3$ is $CH_2CH_3$ and $R^4$ is $CH_2C(CH_3)=CH_2$ (which is *N*-ethyl-*N*-(2-methyl-2-propenyl)-2,6-dinitro-4-(trifluoromethyl)-benzenamine; ethalfluralin); and
d) the compound of Formula **I** and the compound of Formula **II** wherein $R^1$ is $CF_3$, $R^2$ is H, $R^3$ is $CH_2CH_2CH_3$ and $R^4$ is $CH_2CH_2CH_3$ (which is 2,6-dinitro-*N*,*N*-dipropyl-4-(trifluoromethyl)benzenamine; trifluralin).

The mixture of the invention most preferred for enhanced herbicidal utility is the compound of Formula **I** and the compound of Formula **II** wherein $R^1$ is $CH_3$, $R^2$ is $CH_3$, $R^3$ is $CH(CH_2CH_3)_2$ and $R^4$ is H (which is *N*-(1-ethylpropyl)-3,4-dimethyl-2,6-dinitrobenzenamine, pendimethalin).

Also preferred are herbicidal compositions comprising aforesaid preferred mixtures and at least one of the following: surfactant, solid or liquid diluent. Further preferred embodiments are methods of controlling undesired vegetation comprising applying to the locus of the vegetation herbicidally effective amounts of the aforesaid preferred mixtures and preferred herbicidal compositions.

For reason of weed control spectrum and/or crop selectivity, the preferred application of the mixtures of this invention is in sunflower crops.

DETAILS OF THE INVENTION

The Formula **I** compound can be prepared as described in U.S. 4,213,773. The synthesis involves reacting the phenol **1** with 3-chloropropyne (**2**) in the presence of a base such as anhydrous potassium carbonate in a suitable solvent, such as dry acetonitrile.

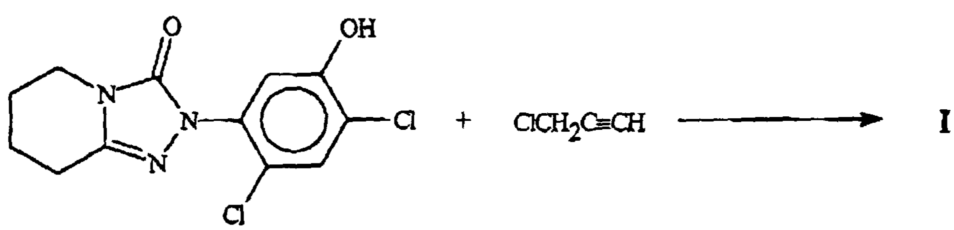

**1** **2**

The Formula **II** compound wherein $R^1$ is $CH_3$, $R^2$ is $CH_3$, $R^3$ is $CH(CH_2CH_3)_2$ and $R^4$ is H (which is *N*-(1-ethylpropyl)-3,4-dimethyl-2,6-dinitrobenzenamine; pendimethalin) (**IIa**) can be prepared as described in U.S. Patent 4,119,669. The synthesis involves nitrating the substituted aniline of Formula **3**.

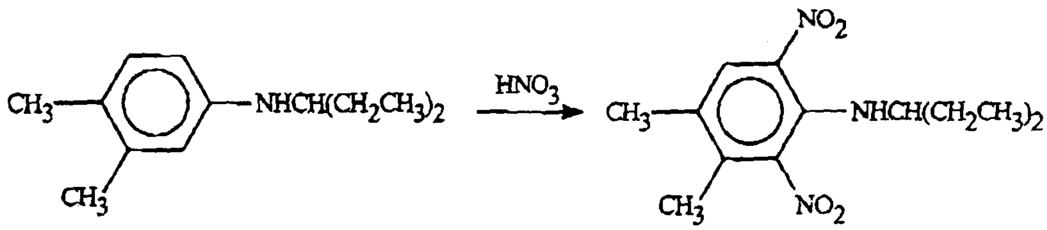


3 IIa

The Formula **II** compound wherein $R^1$ is $CF_3$, $R^2$ is $NH_2$, $R^3$ is $CH_2CH_3$ and $R^4$ is $CH_2CH_3$ (which is $N^3$,$N^3$-diethyl-2,4-dinitro-6-(trifluoromethyl)-1,3-benzenediamine; dinitramine) (**IIb**) can be prepared as described in U.S. Patent 3,617,252. The synthesis involve treating the chlorobenzene of Formula **4** with excess ammonia in a solvent such as ethanol.

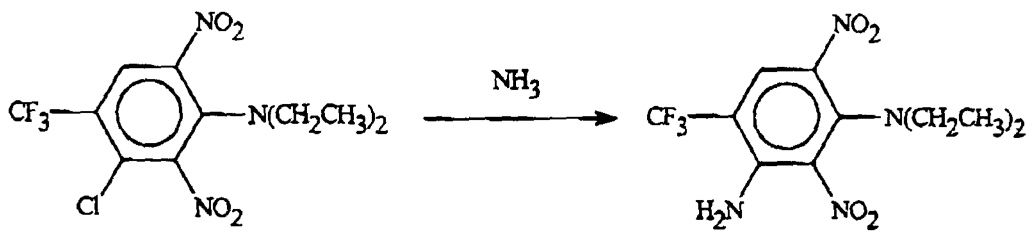


4 IIb

The Formula **II** compounds wherein $R^1$ is $CF_3$, $R^2$ is H, $R^3$ is $CH_2CH_3$ and $R^4$ is $CH_2C(CH_3)=CH_2$ (which is *N*-ethyl-*N*-(2-methyl-2-propenyl)-2,6-dinitro-4-(trifluoromethyl)benzenamine; ethalfluralin) (**IIc**) or $R^1$ is $CF_3$, $R^2$ is H, $R^3$ is $CH_2CH_2CH_3$ and $R^4$ is $CH_2CH_2CH_3$ (which is 2,6-dinitro-*N*,*N*-dipropyl-4-(trifluoromethyl)benzenamine; trifluralin) (**IId**) can be prepared as described in U.S. Patent 3,257,190. The synthesis involves heating the 2,6-dinitrochlorobenzene of Formula **5** with excess amine of Formula **6** in an inert solvent.

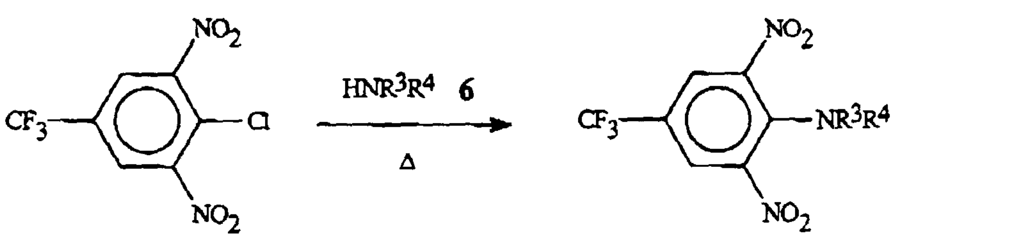


5

$R^3$ is $CH_2CH_3$, $R^4$ is $CH_2C(CH_3)=CH_2$ **IIc**

$R^3$ is $CH_2CH_2CH_3$, $R^4$ is $CH_2CH_2CH_3$ **IId**

Formulation

The mixtures of the Formula **I** and Formula **II** compounds can be formulated in a number of ways:

(a) the Formula **I** and Formula **II** compounds can be formulated separately and applied separately or applied simultaneously in an appropriate weight ratio, e.g., as a tank mix; or

(b) the Formula **I** and Formula **II** compounds can be formulated together in the proper weight ratio.

Mixtures of the Formula **I** and Formula **II** compounds will generally be used in formulation with an agriculturally suitable carrier comprising a liquid or solid diluent and/or a surfactant wherein the formulation is consistent with the physical properties of the active ingredients, mode of application and environmental factors such as soil type, moisture and temperature. Useful formulations include liquids such as solutions (including emulsifiable concentrates), suspensions, emulsions (including microemulsions and/or suspoemulsions) and the like which optionally can be thickened into gels. Useful formulations further include solids such as dusts, powders, granules, pellets, tablets, films, and the like which can be water-dispersible ("wettable") or water-soluble. Active ingredients can be (micro)encapsulated and further formed into a suspension or solid formulation; alternatively the entire formulation of active ingredient can be encapsulated (or "overcoated"). Encapsulation can control or delay release of the active ingredients. Sprayable formulations can be extended in suitable media and used at spray volumes from about one to several hundred liters per hectare. High-strength compositions are primarily used as intermediates for further formulation.

The formulations will typically contain effective amounts of active ingredient, diluent and surfactant within the following approximate ranges which add up to 100 percent by weight.

| | Weight Percent | | |
|---|---|---|---|
| | Active Ingredient | Diluent | Surfactant |
| Water-Dispersible and Water-soluble Granules, Tablets and Powders. | 5-90 | 0-94 | 1-15 |
| Suspensions, Emulsions, Solutions (including Emulsifiable Concentrates) | 5-50 | 40-95 | 0-15 |
| Dusts | 1-25 | 70-99 | 0-5 |
| Granules and Pellets | 0.01-99 | 5-99.99 | 0-15 |
| High Strength Compositions | 90-99 | 0-10 | 0-2 |

Typical solid diluents are described in Watkins, et al., *Handbook of Insecticide Dust Diluents and Carriers*, 2nd Ed., Dorland Books, Caldwell, New Jersey. Typical liquid diluents are described in Marsden, *Solvents Guide*, 2nd Ed., Interscience, New York, 1950. *McCutcheon's Detergents and Emulsifiers Annual*, Allured Publ. Corp., Ridgewood, New Jersey, as well as Sisely and Wood, *Encyclopedia of Surface Active Agents*, Chemical Publ. Co., Inc., New York, 1964, list surfactants and recommended uses. All formulations can contain minor amounts of additives to reduce foam, caking, corrosion, microbiological growth and the like, or thickeners to increase viscosity.

Surfactants include, for example, polyethoxylated alcohols, polyethoxylated alkylphenols, polyethoxylated sorbitan fatty acid esters, dialkyl sulfosuccinates, alkyl sulfates, alkylbenzene sulfonates, organosilicones, *N*,*N*-dialkyltaurates, lignin sulfonates, naphthalene sulfonate formaldehyde condensates, polycarboxylates, and polyoxyethylene/polyoxypropylene block copolymers. Solid diluents include, for example, clays such as bentonite, montmorillonite, attapulgite and kaolin, starch, sugar, silica, talc, diatomaceous earth, urea, calcium carbonate, sodium carbonate and bicarbonate, and sodium sulfate. Liquid diluents include, for example, water, *N*,*N*-dimethylformamide, dimethyl sulfoxide, *N*-alkylpyrrolidone, ethylene glycol, polypropylene glycol, paraffins, alkylbenzenes, alkylnaphthalenes, oils of olive, castor, linseed, tung, sesame, corn, peanut, cotton-seed, soybean, rape-seed and coconut, fatty acid esters, ketones such as cyclohexanone, 2-heptanone, isophorone and 4-hydroxy-4-methyl-2-pentanone, and alcohols such as methanol, cyclohexanol, decanol and tetrahydrofurfuryl alcohol.

Solutions, including emulsifiable concentrates, can be prepared by simply mixing the ingredients. Dusts and powders can be prepared by blending and, usually, grinding as in a hammer mill or fluid-energy mill. Suspensions are usually prepared by wet-milling; see, for example, U.S. 3,060,084. Granules and pellets can be prepared by spraying the active material upon preformed granular carriers or by agglomeration techniques. See Browning, "Agglomeration", *Chemical Engineering*, December 4, 1967, pp 147-48, *Perry's Chemical Engineer's Handbook*, 4th Ed., McGraw-Hill, New York, 1963, pages 8-57 and following, and WO 91/13546. Pellets can be prepared as described in U.S. 4,172,714. Water-dispersible and water-soluble granules can be prepared as taught in U.S. 4,144,050, U.S. 3,920,442 and DE 3,246,493. Tablets can be prepared as taught in U.S. 5,180,587, U.S. 5,232,701 and U.S. 5,208,030. Films can be prepared as taught in GB 2,095,558 and U.S. 3,299,566.

For further information regarding the art of formulation, see U.S. 3,235,361, Col. 6, line 16 through Col. 7, line

19 and Examples 10-41; U.S. 3,309,192, Col. 5, line 43 through Col. 7, line 62 and Examples 8, 12, 15, 39, 41, 52, 53, 58, 132, 138-140, 162-164, 166, 167 and 169-182; U.S. 2,891,855, Col. 3, line 66 through Col. 5, line 17 and Examples 1-4; Klingman, *Weed Control as a Science*, John Wiley and Sons, Inc., New York, 1961, pp 81-96; and Hance et al., *Weed Control Handbook*, 8th Ed., Blackwell Scientific Publications, Oxford, 1989.

In the following Examples, all percentages are by weight and all formulations are prepared in conventional ways.

| Example A | |
|---|---|
| High Strength Concentrate | |
| azafenidin | 4.7% |
| pendimethalin | 93.8% |
| silica aerogel | 0.5% |
| synthetic amorphous fine silica | 1.0%. |

| Example B | |
|---|---|
| Wettable Powder | |
| azafenidin | 4.3% |
| pendimethalin | 60.7% |
| dodecylphenol polyethylene glycol ether | 2.0% |
| sodium ligninsulfonate | 4.0% |
| sodium silicoaluminate | 6.0% |
| montmorillonite (calcined) | 23.0%. |

| Example C | |
|---|---|
| Granule | |
| azafenidin | 1.4% |
| pendimethalin | 8.6% |
| attapulgite granules (low volatile matter, 0.71/0.30 mm; U.S.S. No. 25-50 sieves) | 90.0%. |

| Example D | |
|---|---|
| Extruded Pellet | |
| azafenidin | 1.7% |

(continued)

| Example D | |
|---|---|
| Extruded Pellet | |
| pendimethalin | 23.3% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0%. |

| Example E | |
|---|---|
| High Strength Concentrate | |
| azafenidin | 32.8% |
| pendimethalin | 65.7% |
| silica aerogel | 0.5% |
| synthetic amorphous fine silica | 1.0%. |

| Example F | |
|---|---|
| High Strength Concentrate | |
| azafenidin | 1.0% |
| pendimethalin | 97.5% |
| silica aerogel | 0.5% |
| synthetic amorphous fine silica | 1.0%. |

| Example G | |
|---|---|
| Wettable Powder | |
| azafenidin | 5.9% |
| dinitramine | 59.1% |
| dodecylphenol polyethylene glycol ether | 2.0% |
| sodium ligninsulfonate | 4.0% |
| sodium silicoaluminate | 6.0% |
| montmorillonite (calcined) | 23.0%. |

| Example H | |
|---|---|
| Granule | |
| azafenidin | 0.7% |
| ethalfluralin attapulgite granules (low volatile matter, | 9.3% |
| 0.71/0.30 mm; U.S.S. No. 25-50 sieves) | 90.0%. |

| Example I | |
|---|---|
| Extruded Pellet | |
| azafenidin | 1.7% |
| trifluralin | 23.3% |
| anhydrous sodium sulfate | 10.0% |
| crude calcium ligninsulfonate | 5.0% |
| sodium alkylnaphthalenesulfonate | 1.0% |
| calcium/magnesium bentonite | 59.0%. |

Utility

While the Formula **I** compound is a highly active herbicide effective in controlling many agronomically important weeds, it can cause temporary injury to crops such as sunflower even in preemergent application. Mixing the Formula **I** herbicide with one or more dinitroaniline herbicides of Formula **II** is now discovered to provide a remarkable reduction in herbicide injury to crops such as sunflower while retaining or even synergistically increasing control of weeds such as chickweed (*Stellaria media*). Mixtures of the Formula **I** and Formula **II** herbicides are particularly valuable for control of a wide variety of agronomically important grass and broadleaf weeds in sunflower crops while causing little or no crop injury when applied preemergence to the crop under field use conditions. While the mixtures of the invention should be applied before emergence of sunflower, preferably soon after planting, they can be applied postemergence to the weeds to be controlled. The crop safening of these mixtures on sunflower combined with retention or synergistic increasing of control of weeds such as chickweed is both very valuable and remarkable, as both sunflower and chickweed are broadleaf (dicot) species.

Herbicidally effective amounts of the compounds of Formula **I** and Formula **II** will vary depending on environmental conditions, formulation, method of application, amount and type of vegetation present, etc. The use rate weight ratios of Formula **I** to Formula **II** are in general 1:2 to 1:100, with ratios of 1:6 to 1:20 preferred for most uses. In general, the Formula **I** compound is applied at a rate from 10 to 250 g ai/ha and the Formula **II** compounds are applied at a rate from 200 to 2000 g ai/ha. Preferably, the Formula **I** compound is applied at a rate from 25 to 100 g ai/ha, and the Formula **II** compounds are applied at a rate from 400 to 1000 g ai/ha.

One skilled in the art can readily determine application rates and ratios of the herbicide of Formula **I** to the herbicides of Formula **II** as well as timing necessary for the desired level of weed control and crop safety.

For practical use as herbicide treatments, the mixtures of the invention may be employed in further admixture with other known herbicides and agricultural crop protection chemicals to provide additional spectrum of activity against additional weed species. Herbicides which may be mixed include, but are not limited to, aclonifen, alachlor, flurtamone, carbetamide, clethodim, cycloxydim, diquat dibromide, fluazifop-P-butyl, flurochloridone, glyphosate (including isopropylammonium, trimesium "sulfosate" and other agriculturally suitable salts), glufosinate-ammonium, haloxyfop (especially its agriculturally suitable esters such as ethoxyethyl and methyl, including resolved forms such as haloxyfop-P-methyl), linuron, metobromuron, metolachlor, oxadiargyl, oxadiazon, oxyfluorfen, paraquat, prometryn, propyzamide,

quizalofop-ethyl (and its resolved form quizalofop-P-ethyl), sethoxydim, terbutryn and tri-allate.

Additionally, the mixtures of the invention may be combined with agriculturally acceptable additives such as surfactants, safeners, spreaders, emulsifiers or fertilizers, to improve performance. The mixtures of the invention will generally be used as formulated compositions.

The following Tests demonstrate the control efficacy of the compounds of this invention against specific weeds. The weed control afforded by the compounds is not limited, however, to these species. In these tests, Compound 1 is the Formula **I** compound azafenidin and Compound 2 is the Formula **II** compound wherein $R^1$ is $CH_3$, $R^2$ is $CH_3$, $R^3$ is $CH(CH_2CH_3)_2$ and $R^4$ is H (which is pendimethalin).

## BIOLOGICAL EXAMPLES OF THE INVENTION

The following test protocol was used to obtain the results listed in Tables A1, A2 and A3.

### Test A Protocol

In soil-containing pots were planted seeds of sunflower hybrids 'Rigasol' and 'Viki' and four key weed species, *Digitaria sanguinalis* (DIGSA), *Chenopodium album* (CHEAL), *Sinapsis arvensis* (SINAR) and *Stellaria media* (STEME). Treatments of Compound 1 and Compound 2 separately and in combination dissolved in a non-phytotoxic solvent were applied the same day using a flat-fan sprayer calibrated to deliver 310 L/ha. Treatments were replicated in triplicate and arranged in a random block design. The treated and untreated plants were allowed to grow in a greenhouse provided using supplementary artificial lighting with a day-length of 14 hours, with the temperature maintained at about 20 °C during the day and 15 °C during the night. Plants were kept watered with a dilute balanced fertilizer solution.

After 28 days from treatment the treated plants were compared to untreated controls and visually evaluated. Mean plant response ratings, summarized in Table A, are based upon a 0 to 100 scale where 0 is no effect and 100 is complete control.

Colby's equation was used to calculate the expected additive herbicidal effect of the mixtures of Compound 1 with Compound 2. Colby's equation (Colby, S. R. "Calculating Synergistic and Antagonistic Responses of Herbicide Combinations," *Weeds*, 15(1), pp 20-22 (1967)) calculates the expected additive effect of herbicidal mixtures, and for two active ingredients is of the form:

$$P_{a+b} = P_a + P_b - (P_a P_b / 100)$$

wherein $P_{a+b}$ is the percentage effect of the mixture expected from additive contribution of the individual components,
$P_a$ is the observed percentage effect of the first active ingredient at the same use rate as in the mixture, and
$P_b$ is the observed percentage effect of the second active ingredient at the same use rate as in the mixture.

Combinations of Compound 1 with Compound 2 are surprisingly found to provide considerably less effect on sunflower crops than expected by calculation from Colby's equation, thus demonstrating crop safening, while providing control of certain weeds as good as or better than expected, demonstrating synergism. Tables A1, A2 and A3 list visual assessments of effect on two sunflower hybrid varieties and four agronomically important weeds with Compound 1 and Compound 2 applied alone as single active ingredients, applied as a mixture of the two active ingredients of Compound 1 and Compound 2, and the expected additive effect of the herbicidal mixture of Compound 1 and Compound 2 (Colby's equation). Different ratios of Compound 1 to Compound 2, and different formulation types, also provide useful weed control from the combination of the two herbicides.

**TABLE A1***

Effect on Sunflower 'Rigasol' of Compound 1 and Compound 2 as Active Ingredients Alone and in Mixture

| Compound 1 | Compound 2 | Sunflower 'Rigasol' | |
|---|---|---|---|
| | | Observed | Expected† |
| *Alone* | | | |
| 50 | 0 | 20 | – |
| 0 | 500 | 0 | – |
| 0 | 700 | 0 | – |
| 0 | 900 | 0 | – |
| *Mixtures* | | | |
| 50 | 500 | 18 | 20 |
| 50 | 700 | 5 | 20 |
| 50 | 900 | 10 | 20 |

*Application rates are expressed in g ai/ha for both Compound 1 and Compound 2. Effects are reported as percent injury.

†Expected from the Colby Equation.

**TABLE A2***

Effect on Sunflower 'Viki' of Compound 1 and Compound 2 as Active Ingredients Alone and in Mixture

| Compound 1 | Compound 2 | Sunflower 'Viki' | |
|---|---|---|---|
| | | Observed | Expected† |
| *Alone* | | | |
| 50 | 0 | 23 | – |
| 0 | 500 | 2 | – |
| 0 | 700 | 0 | – |
| *Mixtures* | | | |
| 50 | 500 | 17 | 25 |
| 50 | 700 | 12 | 23 |

*Application rates are expressed in g ai/ha for both Compound 1 and Compound 2. Effects are reported as percent injury.

†Expected from the Colby Equation.

**TABLE A3***

Effect on Weeds of Compound 1 and Compound 2 as Active Ingredients Alone and in Mixture

| Cmpd 1 | Cmpd 2 | STEME | | SINAR | | DIGSA | | CHEAL | |
|---|---|---|---|---|---|---|---|---|---|
| | | Obsd. | Exp.† | Obsd. | Exp. | Obsd. | Exp. | Obsd. | Exp. |
| *Alone* | | | | | | | | | |
| 50 | 0 | 10 | – | 95 | – | 93 | – | 100 | – |
| 0 | 500 | 65 | – | 7 | – | 100 | – | 50 | – |
| 0 | 700 | 77 | – | 77 | – | 100 | – | 93 | – |
| 0 | 900 | 82 | – | 68 | – | 100 | – | 93 | – |
| *Mixtures* | | | | | | | | | |
| 50 | 500 | 85 | 68 | 100 | 95 | 100 | 100 | 100 | 100 |
| 50 | 700 | 97 | 79 | 100 | 99 | 100 | 100 | 100 | 100 |
| 50 | 900 | 95 | 84 | 100 | 98 | 100 | 100 | 100 | 100 |

*Application rates are expressed in g ai/ha for both Compound 1 and Compound 2. Data are reported as percent control.

†Exp. means expected from the Colby Equation; obsd. means observed.

As can be seen from Table A1, the Formula **II** dinitroaniline herbicide pendimethalin (Compound 2) applied at 500, 700 and 900 g/ha significantly safened the Formula **I** herbicide azafenidin (Compound 1) applied at 50 g/ha preemergently to the sunflower hybrid 'Rigasol'. Particularly notable was the 700 g/ha application of pendimethalin, which reduced the injury to a negligible 5% from the 20% expected. The results in Table A2 are for the sunflower hybrid 'Viki', which is somewhat more susceptible to injury by azafenidin. The 700 g/ha application of pendimethalin still reduced injury from 50 g/ha of azafenidin from 23% expected to 12%, a small amount of injury from which the crop would be expected to fully recover. The weed control results listed in Table 3 show the combinations of azafenidin with pendimethalin giving a significantly greater than expected (synergistic) effect on *Stellaria media*, resulting in commercially significant levels of control. For the other three weeds the expected effect is already at or close to 100%, so the synergistic effect cannot be significantly manifest. This combination of crop safening while maintaining or synergistically increasing weed control is not only very unexpected but also commercially valuable.

## Claims

**1.** A herbicidal mixture comprising: the compound of Formula I

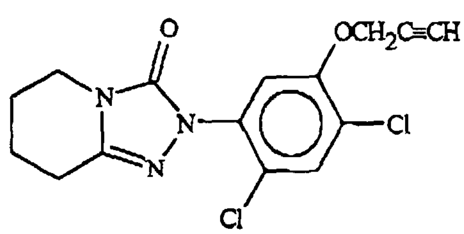

; and

I

at least one dinitroaniline herbicide of Formula **II**

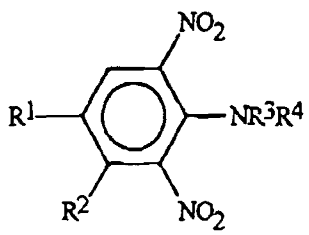

**II**

wherein

$R^1$ is $CH_3$, $R^2$ is $CH_3$, $R^3$ is $CH(CH_2CH_3)_2$ and $R^4$ is H, or
$R^1$ is $CF_3$, $R^2$ is $NH_2$, $R^3$ is $CH_2CH_3$ and $R^4$ is $CH_2CH_3$, or
$R^1$ is $CF_3$, $R^2$ is H, $R^3$ is $CH_2CH_3$ and $R^4$ is $CH_2C(CH_3)=CH_2$, or
$R^1$ is $CF_3$, $R^2$ is H, $R^3$ is $CH_2CH_2CH_3$ and $R^4$ is $CH_2CH_2CH_3$.

2. The mixture of Claim 1 wherein the dinitroaniline herbicide component is pendimethalin.

3. The mixture of Claim 1 wherein the dinitroaniline herbicide component is dinitramine,

4. The mixture of Claim 1 wherein the dinitroaniline herbicide component is ethalfluralin.

5. The mixture of Claim 1 wherein the dinitroaniline herbicide component is trifluralin.

6. An agriculturally suitable composition for controlling the growth of undesired vegetation comprising an effective amount of the herbicidal mixture of any one of Claims 1 through 5 and at least one component selected from the group consisting of surfactants, solid diluents and liquid diluents.

7. A method for controlling the growth of undesired vegetation comprising contacting the locus to be protected with a herbicidally effective amount of the herbicidal mixture of any one of Claims 1 through 5.

8. The method of Claim 7 wherein the locus to be protected is a sunflower crop.

9. The method of Claim 8 wherein the herbicidal mixture is applied preemergent to the crop.

European Patent Office

# EUROPEAN SEARCH REPORT

Application Number
EP 98 40 1023

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 332 718 A (AMUTI KOFI S) 26 July 1994<br>* column 7, line 46 - column 11, line 50 * | 1-9 | A01N43/90<br>A01N33/18<br>//(A01N43/90, 33:18) |
| A | PATENT ABSTRACTS OF JAPAN<br>vol. 012, no. 467 (C-550), 7 December 1988<br>& JP 63 185901 A (SUMITOMO CHEM CO LTD), 1 August 1988,<br>* abstract * | 1-9 | |

TECHNICAL FIELDS SEARCHED (Int.Cl.6)

A01N

The present search report has been drawn up for all claims

| Place of search | Date of completion of the search | Examiner |
|---|---|---|
| MUNICH | 23 September 1998 | Klaver, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT ON EUROPEAN PATENT APPLICATION NO. EP 98 40 1023

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-1998

| Patent document cited in search report | Publication date | Patent family member(s) | Publication date |
|---|---|---|---|
| US 5332718 A | 26-07-1994 | NONE | |

EPO FORM P0459

For more details about this annex : see Official Journal of the European Patent Office, No. 12/82